# EUROPÄISCHE PATENTSCHRIFT

(11) **EP 1 374 484 B1**
(45) Veröffentlichungstag und Bekanntmachung des Hinweises auf die Patenterteilung: **09.05.2007**
(21) Anmeldenummer: 02727270.7
(22) Anmeldetag: 26.03.2002
(51) Int. Cl.: H04L 12/00

(54) **VERFAHREN UND VORRICHTUNG ZUR WEGSTEUERUNG VON IP-VERBINDUNGEN IN EINEM TEILNEHMERBEZOGENEN KOMMUNIKATIONSNETZ**
METHOD AND DEVICE FOR CONTROLLING PATHS FOR IP CONNECTIONS IN A USER-SPECIFIC COMMUNICATION NETWORK
PROCEDE ET DISPOSITIF DE CONTROLE D'ACHEMINEMENT DE CONNEXIONS IP DANS UN RESEAU DE COMMUNICATION SPECIFIQUE ABONNE

(30) Priorität: 05.04.2001 DE 10117133
(43) Veröffentlichungstag der Anmeldung: 02.01.2004
(73) Patentinhaber: T-Mobile Deutschland GmbH, 53227 Bonn (DE)
(72) Erfinder: MICHEL, Uwe, 53604 Bad Honnef (DE)
(74) Vertreter: Riebling, Peter
(86) Internationale Anmeldenummer: PCT/DE2002/001105
(87) Internationale Veröffentlichungsnummer: WO 2002/082719

(56) Entgegenhaltungen:
- WO-A-00/78004
- WO-A-00/79765
- WO-A-98/24208
- US-A- 5 983 270
- MIEI T ET AL: "Parallelization of IP-packet filter rules" INT. CONF. ON ALGORITHMS & ARCHITECTURES FOR PARALLEL PROCESSING, XX, XX, 1997, Seiten 381-388, XP002150561

## Beschreibung

Die Erfindung betrifft ein Verfahren und eine Vorrichtung zur Wegsteuerung (Routing) von IP-Verbindungen in einem teilnehmerbezogenen Kommunikationsnetz nach dem Oberbegriff der unabhängigen Patentansprüche.

Bekannt sind heutzutage folgende Systeme, die aufgrund verschiedener Kriterien IP-Verkehr selektieren bzw. routen, wobei unter IP-Verkehr Datenverbindungen verstanden werden, die das Internet-Protokoll (IP) verwenden:
- Klassische Router
   Ein normaler Router lenkt den Verkehr nur in Abhängigkeit der IP-Zieladresse
- Firewall
   Eine Firewall filtert bestimmte Verkehrsarten aufgrund der im Verkehrsstrom enthaltenen IP-Adressen und aufgrund der verwendeten Protokollschichten aus. Sie zieht hierzu jedoch nur solche Daten in Erwägung, die unmittelbar im IP-Verkehrsstrom enthalten sind und die auf in der Firewall gespeicherte Regeln abgebildet werden.
- Lastverteiler
   Ein Lastverteiler verteilt lastabhängig bzw. statistisch Verkehr zwischen mehreren Zielsystemen.
   Keines der bekannten Systeme nutzt teilnehmerbezogene Kriterien bzw. für diesen Teilnehmer hinterlegte Profile
   als Grundlage des durchzuführenden Routings.
- GPRS
   Das paketorientierte GPRS-Netz beinhaltet in der Kombination von HLR und SGSN ähnlich geartete Funktionen. Dieses System ist für Circuit-Switched-Data IP-traffic jedoch nicht konzipiert.

Die Druckschrift WO 98/26555 beschreibt ein Verfahren in dem nach einem 'userlogin' von dem Zugangsserver ein teilnehmerbezogenes Filterprofil auf einen Router heruntergeladen wird.

Die Aufgabe der Erfindung besteht darin, ein Verfahren und eine Vorrichtung zur Wegsteuerung von IP-Verbindungen in einem teilnehmerbezogenen Kommunikationsnetz vorzuschlagen, bei dem für das Routing teilnehmerindividuelle Kriterien herangezogen werden.

Diese Aufgabe wird durch die Merkmale der unabhängigen Patentansprüche gelöst.

Das erfindungsgemäße System erlaubt es, IP-Verkehr in einem Mobilfunknetz in Abhängigkeit von Teilnehmerdaten zu routen.

Ein wesentlicher Vorteil der Erfindung besteht darin, dass das System unabhängig vom Zugangsnetz eingesetzt werden kann.

Eine mögliche Anwendung eines solchen Systems, z.B. in einem digitalen Mobilkommunikationsnetz ist es, bestimmten Mobilfunkteilnehmern bewusst den Zugang zu bestimmten Zielnetzen (oder auch Netzelementen innerhalb eines Netzes) zuzulassen oder zu verweigern. So könnte man einer bestimmten Gruppe von Mobilfunkteilnehmern (Corporate Customer) den Zugang zu Intranets gewähren, während man deren Zugang zum öffentlichen Internet ausschließen will. Eine andere Anwendung ist die Verteilung von WAP-Verkehr (WAP: Wireless Application Protocol) auf verschiedene WAP-Proxys, um spezielle Mobilfunkdienste, die die Nutzung eines besonderen WAP-Proxy erfordern für den jeweiligen Teilnehmer bewusst zum richtigen WAP-Proxy zu lenken.

Vorteilhafte Ausführungsformen und Weiterbildungen der Erfindung sind in den abhängigen Patentansprüchen angegeben.

Vorzugsweise werden die Teilnehmerdaten von Teilnehmern des Kommunikationsnetzes unter der jeweiligen Teilnehmerkennung in einer speziellen Datenbank gespeichert und sind dort abrufbar.

Zunächst wird in bekannter weise während eines Verbindungsaufbaus eine Teilnehmerkennung über das Kommunikationsnetz an einen RADTUS-Server übermittelt, der dynamisch eine IP-Adresse für den Teilnehmer vergibt und an das Kommunikationsnetz übermittelt.
Diese Verbindung zwischen Kommunikationsnetz und RADIUS-Server wird durch einen RADIUS-Proxy-Server überwacht, der die an den Teilnehmer vergebene IP-Adresse und die zugeordnete Teilnehmerkennung erfasst und in Relation zu den in der Datenbank abgespeicherten Teilnehmerdaten setzt und dort abgespeichert.

Werden mehrere RADIUS-Server eingesetzt, so überwacht der RADIUS-Proxy-Server die Verbindungen zu allen diesen unterschiedlichen RADIUS-Servern.

Während der Verbindung wird nun jeglicher IP-Verkehr vom Kommunikationsnetz an einen speziellen Router gesendet, wobei jedes einzelne eintreffende IP-Datenpaket zu einer Abfrage der Datenbank führt, und in Abhängigkeit der ermittelten Teilnehmeridentität und des zugehörigen Teilnehmerprofils das Routing zum Zielsystem erfolgt.

Dabei spielt es keine Rolle, ob das Zielsystem ein Zielkommunikationsnetz (APN) oder nur ein bestimmtes Netzelement ist.

In Abhängigkeit der in der Datenbank gespeicherten Teilnehmerdaten können nun für den entsprechenden Teilnehmer bestimmte Zieladressen gesperrt und/oder die im Verkehrsstrom vorhandenen Ziel-IP-Adressen manipuliert werden.

Eine Vorrichtung zur Durchführung des Verfahrens umfasst im wesentlichen eine Datenbank, in der eine Relation zwischen einem Teilnehmer zugeordneter IP-Adresse, Teilnehmerkennung und Teilnehmerprofil gespeichert wird, einen RADIUS-Proxy-Server, der bei der IP-Adressvergabe die Relation zwischen IP-Adresse und Teilnehmerkennung herstellt und in die Datenbank schreibt, und einen Router, der für jedes IP-Datenpaket der IP-Verbindung eine Abfrage der Datenbank durchführt und in Abhängigkeit der Teilnehmerdaten das Routing zum Zielsystem vornimmt.

Im folgenden wird die Erfindung anhand eines Ausführungsbeispiels unter Bezugnahme auf die Zeichnungen näher erläutert. Aus den Zeichnungen und ihrer Beschreibung ergeben sich weitere Merkmale, Vorteile und Anwendungen der Erfindung.

Es zeigt:
Figur 1: Den Aufbau einer IP-Verbindung mit IP-Adressvergabe;
Figur 2: Den Routingvorgang nach erfolgter IP-Adressvergabe.

Die Wirkungsweise des Systems wird durch die beiden Zeichnungsfiguren verdeutlicht.

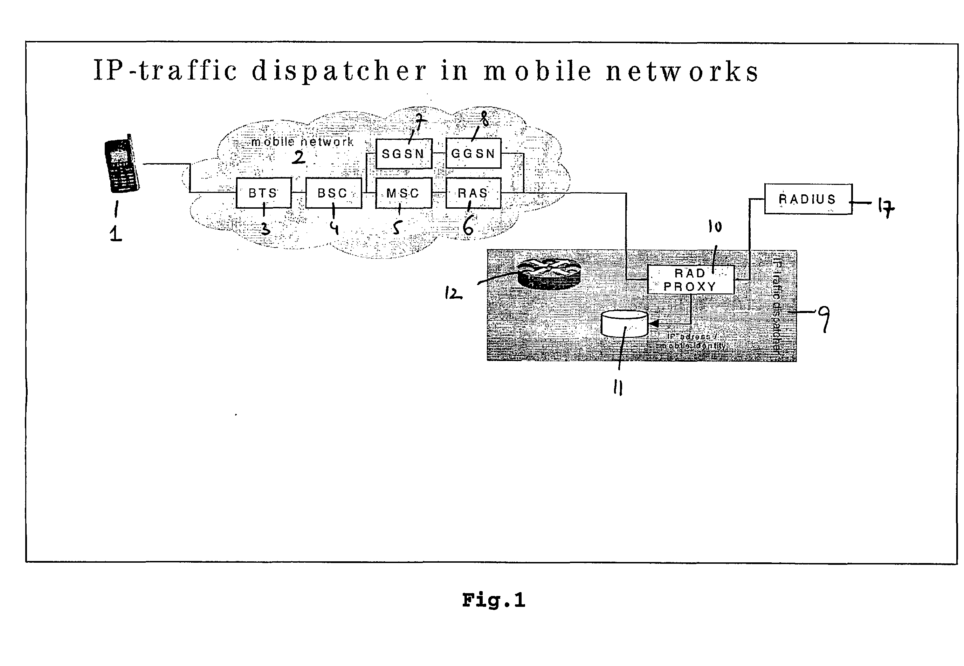

Figur 1 verdeutlicht den Aufbau einer IP-Verbindung (typischerweise eine Punkt-zu-Punkt-Verbindung), zwischen einem Mobilkommunikationsendgerät 1 eines Teilnehmers des Mobilkommunikationsnetzes 2 und einem Zielsystem, welches ein anderes Zielkommunikationsnetz oder auch nur ein bestimmtes Netzelement in einem Zielkommunikationsnetz sein kann.

Das Mobilkommunikationsnetz 2 umfasst die bekannten Netzelemente, die für einen Verbindungsaufbau notwendig sind, wie Basisstation 3, Basisstationssteuerung 4 und Mobilvermittlungsstelle 5. Ferner können auch GPRS-Netzelemente, wie GPRS-Diensteknoten 7 und GPRS-Gateway 8 (Übergangsvermittlung) vorhanden sein, die jedoch im Rahmen der Erfindung nicht von Bedeutung sind.

Für den Aufbau einer IP-Verbindung ist ein Remote Access Server 6 (RAS) eingerichtet, der den Einwähldienst z.B. zum Internet bereitstellt. Für jede Internetverbindung ist die Vergabe einer temporären, nur für die jeweilige Verbindung gültigen IP-Adresse notwendig. Anhand der IP-Adresse wird dann die Wegsteuerung der Daten vorgenommen.

Zur Vergabe einer IP-Adresse wird im Beispiel das RADIUS-Protokoll (oder ähnliche Protokolle) verwendet, das von einem RADIUS-Server 17 bereitgestellt wird. Hierbei übermittelt das Mobilkommunikationsnetz 2 die Teilnehmerkennung des Teilnehmers, die in einem Teilnehmeridentitätsmodul (SIM) des Mobilkommunikationsendgeräts 1 abgelegt ist, an den RADIUS-Server 17, der seinerseits dynamisch eine IP-Adresse für den Mobilfunkteilnehmer vergibt und zurück an das Mobilkommunikationsnetz 2 übermittelt.

Erfindungsgemäß ist zwischen Mobilfunknetz 2 bzw. RAS 6 ein spezielles Wegsteuerungssystem 9 geschaltet, das die Vergabe der IP-Adressen überwacht.
Hierzu umfasst das Wegesteuerungssystem 9 einen RADIUS-Proxy-Server 10. Unter Proxy-Server wird allgemein eine Einrichtung verstanden, die Anforderungen von einem Client entgegennimmt und sie, gegebenenfalls modifiziert, an ein Ziel weitergibt.
Der RADIUS-Proxy-Server 10 erfasst bei der IP-Adressvergabe die IP-Adresse und zugeordnete Teilnehmerkennung (IMSI oder MSISDN) des Teilnehmers, verknüpft sie miteinander und schreibt sie in eine systeminterne Datenbank 11.

Sind mehrere unterschiedliche RADIUS-Server 17 in Verbindung mit einem Mobilkommunikationsnetz 2 im Einsatz (z.B. da angeschlossene Internet Service Provider die IP-Adressen vergeben), so werden sämtliche RADIUS-Verbindungen durch den RADIUS-Proxy-Server 10 überwacht. Die mitgelesene Relation zwischen Teilnehmerkennung und IP-Adresse wird vom RADIUS-Proxy-Server 10 unmittelbar in die interne Datenbank 11 des Wegsteuerungssystems 9 geschrieben.

In die Datenbank 11 wurden zuvor, im Rahmen eines Administrationsvorgangs ggf. unter Nutzung externer Systeme, die entsprechenden Teilnehmerdaten der Teilnehmer des Mobilkommunikationsnetzes 2 unter der jeweiligen individuellen Teilnehmerkennung gespeichert. Hierbei können die Teilnehmerdaten aller Teilnehmer oder ausgewählter Gruppen gespeichert sein. Anhand der vom Proxy-Server 10 erfassten IP-Adresse wird in der Datenbank 11 nun eine Verknüpfung zwischen der einem Teilnehmer zugeordneter IP-Adresse, der Teilnehmerkennung und den Teilnehmerdaten (Teilnehmerprofil) hergestellt.
Dadurch ist das Wegsteuerungssystem 9 nunmehr in der Lage, die Teilnehmerprofile auf IP-Adressen abzubilden.

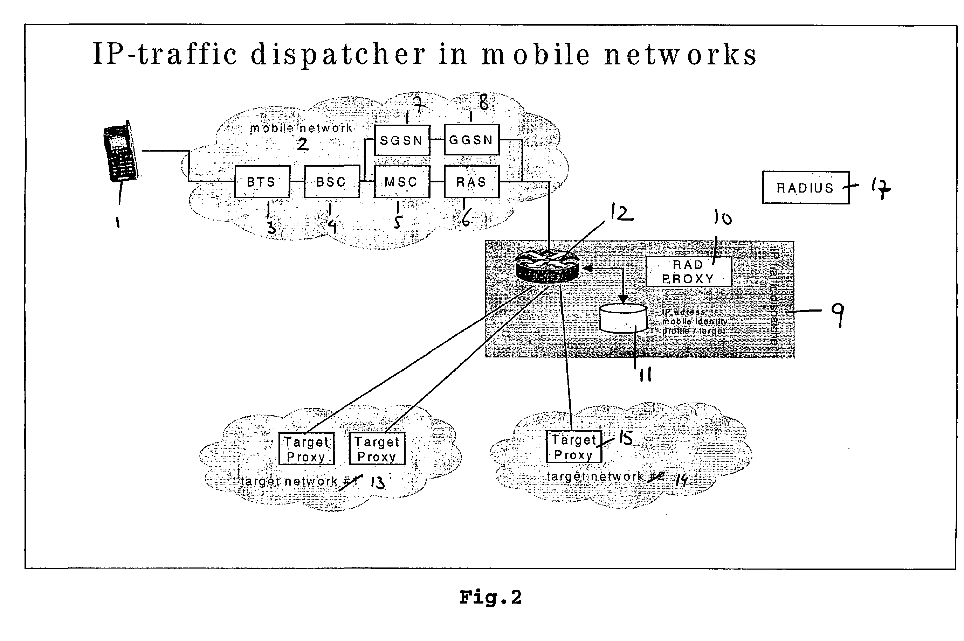

Figur 2 verdeutlicht den eigentlichen Routingvorgang nach erfolgter IP-Adressvergabe. Das Mobilkommunikationsnetz 2 sendet jeglichen IP-Verkehr der betreffenden IP-Verbindung an einen Router 12 des erfindungsgemäßen Wegsteuerungssystems 9. Der Router 12 führt für jedes einzelne bei ihm eintreffende IP-Datenpaket anhand der zugeordneten IP-Adresse eine Abfrage der entsprechenden Teilnehmerdaten in der Datenbank 11 durch. In Abhängigkeit der ermittelten Teilnehmeridentität und des zugehörigen Teilnehmerprofils erfolgt dann das Routing zu einem Zielsystem. Das Zielsystem kann dabei ein ganzes Zielkommunikationsnetz 13, 14 sein oder auch nur ein bestimmtes Netzelement, wie z.B. ein Ziel-Proxy-Server 15,

Das erfindungsgemäße Wegsteuerungssystem 9 belegt also in Abhängigkeit der Teilnehmerdaten bestimmte Ausgangsports, d.h. sperrt bestimmte Zieladressen und/oder manipuliert ggf. die im Verkehrsstrom vorhandenen IP-Adressen.

### Zeichnungslegende

- 1: Mobilkommunikationsendgerät
- 2: Mobilkommunikationsnetz
- 3: Basisstation
- 4: Basisstationssteuerung
- 5: Mobilvermittlungsstelle
- 6: Remote Access Server
- 7: GPRS Diensteknoten
- 8: GPRS Gateway
- 9: Wegsteuerungssystem
- 10: RADIUS-Proxy-Server
- 11: Datenbank
- 12: Router
- 13: Zielkommunikationsnetz
- 14: Zielkommunikationsnetz
- 15: Ziel-Proxy Server
- 16: Ziel-Proxy-Server
- 17: RADIUS-Server

## Patentansprüche

1. Verfahren zur Wegsteuerung von IP-Verbindungen in einem teilnehmerbezogenen Kommunikationsnetz, insbesondere in einem digitalen Mobilkommunikationsnetz, wobei die IP-Verbindungen in Abhängigkeit von Teilnehmerdaten geroutet werden, und die Teilnehmerdaten von Teilnehmern des Kommunikationsnetzes (2) unter der jeweiligen Teilnehmerkennung in einer Datenbank (11) gespeichert werden und dort abrufbar sind
**dadurch gekennzeichnet,**
**dass** während der Verbindung jeglicher IP-Verkehr vom Kommunikationsnetz (2) an einen Router (12) gesendet wird, wobei jedes einzelne eintreffende IP-Datenpaket zu einer Abfrage der Datenbank (11) anhand der IP-Adresse führt und in Abhängigkeit der ermittelten Teilnehmeridentität und des zugehörigen Teilnehmerprofils das Routing zu einem Zielsystem (13-16) erfolgt.

2. Verfahren nach Anspruch 1, **dadurch gekennzeichnet, dass** während eines Verbindungsaufbaus eine Teilnehmerkennung über das Kommunikationsnetz (2) an einen RADIUS-Server (17) übermittelt wird, wobei der RADIUS-Server (17) dynamisch eine IP-Adresse für den Teilnehmer vergibt und an das Kommunikationsnetz (2) übermittelt.

3. Verfahren nach einem der vorhergehenden Ansprüche, **dadurch gekennzeichnet, dass** die Verbindung zwischen Kommunikationsnetz (2) und RADIUS-Server (17) durch einen RADIUS-Proxy-Server (10) überwacht wird, dort die an den Teilnehmer vergebene IP-Adresse und die zugeordnete Teilnehmerkennung erfasst und in Relation zu den in der Datenbank (11) abgespeicherten Teilnehmerdaten gesetzt und abgespeichert wird.

4. Verfahren nach einem der vorhergehenden Ansprüche, **dadurch gekennzeichnet, dass** die Verbindungen zu mehreren unterschiedlichen RADIUS-Servern (17) vom RADIUS-Proxy-Server (10) überwacht werden.

5. Verfahren nach einem der vorhergehenden Ansprüche, **dadurch gekennzeichnet, dass** das Zielsystem ein Zielkommunikationsnetz (13, 14) oder ein bestimmtes Netzelement (15) ist.

6. Verfahren nach einem der vorhergehenden Ansprüche, **dadurch gekennzeichnet, dass** in Abhängigkeit der in der Datenbank (11) gespeicherten Teilnehmerdaten bestimmte Zieladressen gesperrt und/oder die im Verkehrsstrom vorhandenen Ziel-IP-Adressen manipuliert werden.

7. Vorrichtung zur Wegsteuerung von IP-Verbindungen in einem teilnehmerbezogenen Kommunikationsnetz, insbesondere in einem digitalen Mobilkommunikationsnetz, **gekennzeichnet durch**:
eine Datenbank (11), in der eine Relation zwischen einem Teilnehmer zugeordneter IP-Adresse, Teilnehmerkennung und Teilnehmerprofil gespeichert wird;
einen RADIUS-Proxy-Server (10), die bei der IP-Adressvergabe die Relation zwischen IP-Adresse und
Teilnehmerkennung herstellt und in die Datenbank (11) schreibt; und
einen Router (12), der für jedes IP-Datenpaket der IP-Verbindung eine Abfrage der Datenbank (11) durchführt und in Abhängigkeit der ermittelten Teilnehmeridentität und des zugehörigen Teilnehmerprofils das Routing zum Zielsystem (13-16) vornimmt.

## Claims

1. Method for controlling the routes of IP connections in a subscriber-related communications network, in particular in a digital mobile communications network, wherein the IP connections are routed as a function of subscriber data and the subscriber data of subscribers of the communications network (2) are stored in a database (11) under the respective subscriber identification and are retrievable from there, **characterised in that** during the connection any IP traffic from the communications network (2) is sent to a router (12), wherein every single IP data packet arriving results in interrogation of the database (11) on the basis of the IP address and as a function of the subscriber identity determined and of the associated subscriber profile the routing to a target system (13 - 16) ensues.

2. Method according to claim 1, **characterised in that** during establishment of a connection a subscriber identification is transmitted via the communications network (2) to a RADIUS server (17), wherein the RADIUS server (17) dynamically issues an IP address for the subscriber and transmits it to the communications network (2).

3. Method according to any of the preceding claims, **characterised in that** the connection between the communications network (2) and RADIUS server (17) is monitored by a RADIUS proxy server (10) where the IP address issued to the subscriber and the associated subscriber identification are captured, set in relation to the subscriber data stored in the database (11) and stored.

4. Method according to any of the preceding claims, **characterised in that** the connections to a plurality of different RADIUS servers (17) are monitored by the RADIUS proxy server (10).

5. Method according to any of the preceding claims, **characterised in that** the target system is a target communications network (13, 14) or a certain network element (15).

6. Method according to any of the preceding claims, **characterised in that** as a function of the subscriber data stored in the database (11) certain target addresses are barred and/or the target IP addresses present in the stream of traffic are manipulated.

7. Device for controlling the routes of IP connections in a subscriber-related communications network, in particular in a digital mobile communications network,
**characterised by**:
a database (11) in which a relationship among an IP address associated with a subscriber, subscriber identification and subscriber profile is stored;
a RADIUS proxy server (10) which on issue of the IP address establishes the relationship between IP address and subscriber identification and writes it to the database (11); and
a router (12) which for every IP data packet of the IP connection carries out an interrogation of the database (11) and as a function of the subscriber identity determined and of the associated subscriber profile undertakes routing to the target system (13 - 16).

## Revendications

1. Procédé de contrôle d'acheminement de connexions IP dans un réseau de communication lié aux abonnés, en particulier dans un réseau de communication mobile numérique, les connexions IP étant acheminées en fonction de données d'abonné et les données d'abonnés étant mises en mémoire par les abonnés du réseau de communication (2) sous l'identification d'abonné correspondante dans une banque de données (11) et pouvant être interrogées dans celle-ci,
**caractérisé en ce que** pendant la connexion, tout trafic IP est envoyé par le réseau de communication (2) à un routeur (12), tout paquet de données IP individuel qui arrive menant à une interrogation de la banque de données (11) à l'aide de l'adresse IP, et le routage vers un système de destination (13-16) se faisant en fonction de l'identité d'abonné déterminée et du profil d'abonné correspondant.

2. Procédé selon la revendication 1, **caractérisé en ce que** pendant l'établissement d'une communication, une identification d'abonné est transmise à un serveur RADIUS (17) par l'intermédiaire du réseau de communication (2), le serveur RADIUS (17) donnant de manière dynamique une adresse IP pour l'abonné et la transmettant au réseau de communication (2).

3. Procédé selon l'une des revendications précédentes, **caractérisé en ce que** la connexion entre le réseau de communication (2) et le serveur RADIUS (17) est surveillée par un serveur proxy RADIUS (10), dans lequel l'adresse IP donnée à l'abonné et l'identification d'abonné associée sont détectées, mises en relation avec les données d'abonné stockées dans la banque de données (11), et mises en mémoire.

4. Procédé selon l'une des revendications précédentes, **caractérisé en ce que** les connexions avec plusieurs serveurs RADIUS différents (17) sont surveillées par le serveur proxy RADIUS (10).

5. Procédé selon l'une des revendications précédentes, **caractérisé en ce que** le système de destination est un réseau de communication de destination (13, 14) ou un élément de réseau défini (15).

6. Procédé selon l'une des revendications précédentes, **caractérisé en ce qu'**en fonction des données d'abonné stockées dans la banque de données (11), des adresses de destination définies sont bloquées et/ou les adresses IP de destination présentes dans le flux de trafic sont manipulées.

7. Dispositif de contrôle d'acheminement de connexions IP dans un réseau de communication lié aux abonnés, en particulier dans un réseau de communication mobile numérique, **caractérisé par** :
une banque de données (11) dans laquelle est stockée une relation entre une adresse IP, une identification d'abonné et un profil d'abonné attribués à un abonné ;
un serveur proxy RADIUS (10) qui, lors de l'attribution de l'adresse IP, établit la relation entre l'adresse IP et l'identification d'abonné et inscrit cette relation dans la banque de données (11) ; et
un routeur (12) qui, pour chaque paquet de données IP de la connexion IP, réalise une interrogation de la banque de données (11) et procède au routage vers le système de destination (13-16) en fonction de l'identité d'abonné déterminée et du profil d'abonné correspondant.
